(19) Europäisches Patentamt
European Patent Office
Office européen des brevets

(11) **EP 1 992 536 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(51) Int Cl.:
**B60W 10/06** *(2006.01)*   **B60W 10/08** *(2006.01)*
**B60W 10/30** *(2006.01)*   **B60W 30/18** *(2006.01)*

(21) Anmeldenummer: **08008245.6**

(22) Anmeldetag: **30.04.2008**

(54) **Verfahren zur Begrenzung des Eingangsmoments an einer Getriebebaueinheit und Steuerungssystem**

Method for limiting the entry momentum of a transmission component and control system

Procédé de limitation du moment d'entrée sur une unité de boîte de vitesse et système de commande

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.05.2007 DE 102007022812**

(43) Veröffentlichungstag der Anmeldung:
**19.11.2008 Patentblatt 2008/47**

(73) Patentinhaber: **Voith Patent GmbH 89522 Heidenheim (DE)**

(72) Erfinder: **Forner, Thomas 73431 Aalen (DE)**

(74) Vertreter: **Schmidt, Sven Hendrik Dr. Weitzel & Partner Friedenstraße 10 89522 Heidenheim (DE)**

(56) Entgegenhaltungen:
**DE-A1- 19 932 309     GB-A- 2 411 739
JP-A- 59 192 839     US-B1- 6 336 063**

**Beschreibung**

Die Erfindung betrifft ein Verfahren zur Begrenzung des am Eingang einer Getriebebaueinheit aufnehmbaren Eingangsmomentes, im einzelnen mit den Merkmalen aus dem Oberbegriff des Anspruchs 1.

Automatgetriebe, insbesondere Getriebebaueinheiten mit einem hydrodynamischen Getriebeteil und einem mechanischen Getriebeteil, wobei der hydrodynamische Getriebeteil vorzugsweise einen hydrodynamischen Drehzahl-/ Drehmomentwandler umfasst, sind in einer Vielzahl von Ausführungen bekannt. Dabei ergeben sich bei derartigen Getrieben aufgrund der Wandlercharakteristik und der dahinterliegenden mechanischen Übersetzungen in der Regel sehr hohe Momentan-Übersetzungsverhältnisse. Das Maximum ergibt sich dabei im Stillstand. Mit diesem wird auch das Eingangsdrehmoment auf den Getriebeausgang übertragen, was in der Dimensionierung der einzelnen leistungsübertragenden Elemente der Getriebebaueinheit entsprechend berücksichtigt werden muss. Die Dimensionierung der Getriebebaueinheit erfolgt dabei auf einen in der Regel unbegrenzten Momenten-Spitzenwert. Dies hat zur Folge, daß zur Gewährleistung einer sicheren Betriebsweise mitunter auch Überdimensionierungen erforderlich sind, die sich in einer erheblichen Steigerung der Kosten niederschlagen. Des weiteren sind in den Betriebszuständen, in denen übermäßig hohe Momente übertragen werden, auch die einzelnen an der Leistungsübertragung beteiligten Elemente höheren Beanspruchungen ausgesetzt, was sich in der Regel in einer unzulässig hohen Erwärmung oder anderen negativen Erscheinungen niederschlägt, Dies wirkt sich über den Gesamtbetriebszyklus betrachtet in einer Verringerung der Lebensdauer und damit Verfügbarkeit der Getriebebaueinheit aus. Insbesondere für den Antrieb von Schienenfahrzeugen finden Antriebsstränge Verwendung, welche eine Verbrennungskraftmaschine sowie ein mit dieser koppelbares mechanisches, hydromechanisches oder hydrodynamisches Getriebe aufweisen, wobei zusätzlich von der Verbrennungskraftmaschine ein Generator angetrieben wird, welcher die zur Versorgung des Bordnetzes erforderliche Bordspannung bereitstellt. Am Eingang der mit der Verbrennungskraftmaschine gekoppelten Getriebebaueinheit liegt dabei jeweils das Drehmoment an, das sich aus der vom Dieselmotor abgegebenen Leistung abzüglich des vom Generator aufgenommenen Drehmoments ergibt. Auch hier besteht die Problematik, dass aus Gründen der Auslegung des Antriebsstranges, insbesondere der Einzelkomponente Getriebebaueinheit nur ein maximales Drehmoment von dieser aufgenommen werden kann. Wird dieses Moment überschritten, wird das Getriebe beschädigt oder zerstört. Das vom Generator aufgenommene Drehmoment wiederum hängt von der aktuellen Stromaufnahme des Bordnetzes ab und kann auch in bestimmten Fällen gleich null betragen. Um nunmehr eine Überlastung der Getriebebaueinheit zu verhindern, wird daher bei bekannten Antriebssystemen die Verbrennungskraftmaschine auf das maximal zulässige Getriebeeingangsmoment hinsichtlich seiner Leistungsabgabe begrenzt. Bei hoher Generatorleistung wird dadurch die zur Beschleunigung des Fahrzeuges zur Verfügung stehende Leistung in entsprechender Weise reduziert, was zu einem Widerspruch zwischen dem Fahrerwunsch, d.h. der Vorgabe durch den Fahrer an einem entsprechenden Betätigungselement, beispielsweise Fahrpedal, und dem tatsächlich eintretenden Ergebnis führt, so dass der Fahrer keinen allgemein verbindlichen subjektiven Eindruck für das Fahrverhalten erlangen kann und hier immer auf entsprechende Hilfsmittel zur Erkennung angewiesen ist. Dies ist vor allem dann sehr problematisch, wenn ein Beschleunigungsverhalten erforderlich ist, welches nicht in einer dazu zur Verfügung stehenden Zeit oder über eine entsprechende Strecke erreicht werden kann, da die vom Generator angeforderte Leistung zu hoch ist.

Ein Verfahren zur Steuerung des Eingangsmomentes an einem Eingang einer Getriebebaueinheit in einem Antriebssystem für Fahrzeuge, umfassend eine Verbrennungskraftmaschine, eine mit dieser koppelbare Getriebebaueinheit und eine mit der Verbrennungskraftmaschine gekoppelte, als Generator fungierende elektrische Maschine, ist ferner aus der gattungsbildenden Druckschrift DE 101 37 475 vorbekannt. Dieses zeichnet sich dadurch aus, dass die Verbrennungskraftmaschine hinsichtlich der theoretisch möglichen Leistungsabgabe die jeweils maximal vom Generator aufnehmbare Leistung und gleichzeitig das am Eingang der Getriebebaueinheit zulässige maximal aufnehmbare Drehmoment aufbringen kann, wobei das maximale Drehmoment über einen bestimmten Drehzahlbereich möglich sein sollte und damit die maximal mögliche, über die Getriebebaueinheit übertragbare Leistung definiert. Entsprechend des Fahrerwunsches nach Änderung des Fahrzustandes - Beschleunigung oder Verzögerung - durch Sollwertvorgabe an einem Betätigungselement, beispielsweise Fahrpedal, wird dabei ein Sollwert für die an der Verbrennungskraftmaschine abzugebende Leistung vorgegeben. Unter Berücksichtigung des maximal zulässigen, von der Getriebeeingangswelle bzw. am Getriebeeingang aufnehmbaren Momentes wird dabei in Abhängigkeit der aktuellen Ist-Drehzahl der Verbrennungskraftmaschine und des vom Generator aufnehmbaren Momentes dieser Sollwert dahingehend korrigiert, dass das von der Verbrennungskraftmaschine unter Berücksichtigung des aktuell geforderten Momentes für den Generator abgebbare Moment an das Getriebe das maximal zulässige Eingangsmoment der Getriebebaueinheit nicht überschreitet. Zu diesem Zweck wird in Abhängigkeit des aus dem Bordnetz entnommenen Stroms das aktuell erforderliche Generatormoment bei entsprechender Drehzahl der Verbrennungskraftmaschine ermittelt und in einer Steuereinrichtung verarbeitet. Aufgrund von kumulierten Reaktionszeiten bei den oben dargestellten Regelungsarten beim Abschalten von Nebenaggregatslasten liegt temporär eine Überlastung des Getriebes vor, bis die Regelfunktion die sich verändernden Bedingungen nachführt und den Sollwert zum Motorsteuergerät verringert hat. Diese Reduzierung bewirkt ebenfalls zeitverzögert eine Verringerung des Motormomentes. Diese temporären Überlastungen können durch Begrenzung der Laständerung innerhalb einer Zeitspanne Δt verringert, jedoch nicht gänzlich verhindert werden.

Zum technischen Umfeld wird weiter auf GB-A-2 411 739 verwiesen.

Der Erfindung liegt daher die Aufgabe zugrunde, ein Verfahren zur Steuerung und/oder Regelung des Eingangsmomentes in einer Getriebebaueinheit in einem Antriebsstrang bzw. Antriebssystem der eingangs genannten Art derart weiterzuentwickeln, dass zum einen immer entsprechend des Fahrerwunsches nach Beschleunigung und Verzögerung dieser Fahrerwunsch am Abtrieb, d. h. dem Antriebsstrang über die Getriebebaueinheit bereitgestellt werden kann, wobei unabhängig davon auch die erforderliche Leistung für den Generator bereitgestellt werden soll. Dabei sind aufgrund der kumulierten Reaktionszeiten temporäre Überlastungen zu verhindern bzw. zu eliminieren. Die vorrichtungsmäßige Umsetzung soll sich dabei durch einen geringen konstruktiven, fertigungstechnischen und steuerungstechnischen Aufwand auszeichnen.

Die erfindungsgemäße Lösung ist durch die Merkmale des Anspruchs 1 charakterisiert. Vorteilhafte Ausgestaltungen sind in den Unteransprüchen wiedergegeben.

Das Verfahren zur Steuerung des Eingangsmomentes an einem Eingang einer Getriebebaueinheit in einem Antriebssystem für Fahrzeuge, umfassend eine Verbrennungskraftmaschine, eine mit dieser koppelbare Getriebebaueinheit und eine mit Verbrennungskraftmaschine gekoppelte, als Generator fungierende elektrische Maschine, zeichnet sich dadurch aus, dass die Verbrennungskraftmaschine hinsichtlich der theoretisch möglichen Leistungsabgabe die jeweils maximal vom Generator aufnehmbare Leistung und gleichzeitig das am Eingang der Getriebebaueinheit maximal zulässige aufnehmbare Drehmoment aufbringen kann, wobei das maximale Drehmoment für einen bestimmten Drehzahlbereich möglich ist und damit die maximal mögliche, über die Getriebebaueinheit übertragbare Leistung definiert. Entsprechend eines Fahrerwunsches nach Änderung des Fahrzustandes - Beschleunigung oder Verzögerung durch Sollwertvorgabe an einem Betätigungselement, beispielsweise Fahrpedal, wird dabei ein Sollwert für die an die Verbrennungskraftmaschine abzugebende Leistung vorgegeben. Unter Berücksichtigung des maximal zulässigen, von der Getriebeeingangswelle bzw. am Getriebeeingang aufnehmbaren Momentes wird dabei in Abhängigkeit der aktuellen Ist-Drehzahl der Verbrennungskraftmaschine und des vom Generator aufnehmbaren Momentes dieser Sollwert dahingehend korrigiert, dass von der Verbrennungskraftmaschine unter Berücksichtigung des aktuell geforderten Momentes für den Generator $M_{Generator}$ das abgebbare Moment an das Getriebe das maximal zulässige Eingangsmoment der Getriebebaueinheit nicht überschreitet. Zu diesem Zweck wird in Abhängigkeit des aus dem Bordnetz entnommenen Stromes I das aktuell erforderliche Generatormoment bei entsprechender Drehzahl der Verbrennungskraftmaschine ermittelt und in einer Steuereinrichtung verarbeitet. Des weiteren wird neben der aktuellen Drehzahl der Verbrennungskraftmaschine die aktuelle Einspritzmenge ermittelt, aus welcher auf die von der Verbrennungskraftmaschine momentan abgebbare Leistung geschlossen werden kann und sich somit das zumindest proportional zum Eingangsmoment der Getriebebaueinheit vorliegende Moment der Verbrennungskraftmaschine $M_M$ gebildet werden kann. Aus dem dem Fahrerwunsch entsprechenden Sollwert für die am Abtrieb bereitzustellende Leistung ergibt sich somit für eine bestimmte Drehzahl der Verbrennungskraftmaschine ein bestimmtes Sollmoment $M_{Soll}$ für die Getriebebaueinheit, welches erfindungsgemäß unter Berücksichtigung des über eine antizipierende Momentenregelung ermittelten anrechenbaren Generatormomentes ein von der Verbrennungskraftmaschine abgebbares Gesamtmoment bestimmt. Ist das Eingangsmoment dabei kleiner als das maximal zulässige Eingangsmoment, wird der Fahrerwunsch entsprechend am Leistungsstellglied der Verbrennungskraftmaschine umgesetzt. Ist das dabei ermittelte Eingangsmoment größer oder gleich dem maximal zulässigen Eingangsmoment, erfolgt eine Reduzierung der von der Verbrennungskraftmaschine abgebbaren Leistung bei dieser Drehzahl, so dass das maximal zulässige Eingangsmoment nicht überschritten wird, d.h. das am Getriebeeingang einzuleitende Sollmoment nunmehr gleich dem maximal zulässigen Eingangsmoment gesetzt wird, so dass der Fahrerwunsch nicht direkt umgesetzt wird. Bei Beibehaltung des Fahrerwunsches und Änderung der Gegebenheiten, d,h. Verringerung der Anforderung an den Generator oder Reduzierung der Drehzahl der Verbrennungskraftmaschine wird nach Art eines Regelkreises die tatsächliche Sollwertvorgabe nachgeregelt, indem die Stellgröße am Leistungsstellglied der Verbrennungskraftmaschine entsprechend geändert wird, wobei jedoch das maximal zulässige Eingangsmoment an der Getriebebaueinheit nicht überschritten werden darf. Um kumulierte Reaktionszeiten bei den oben dargestellten Regelungsarten beim Abschalten von Nebenaggregatslasten und damit eine temporäre Überlastung des Getriebes zu vermeiden, wird nicht der tatsächlich eingestellte Istwert für die Nebenaggregatsleistung berücksichtigt sondern ein anrechenbarer Wert, der vor der tatsächlichen Einstellung berechnet wird. Die erfindungsgemäße Lösung bietet den Vorteil, dass zum einen durch die konkrete Begrenzbarkeit des Eingangsmomentes der Getriebebaueinheit diese nahezu immer bzw. nur geringfügig zeitlich verzögert entsprechend dem Fahrerwunsch mit Leistung versorgt werden kann und des weiteren eine Dimensionierung des Getriebes nur hinsichtlich der vorgegebenen Grenzwerte für das Eingangsdrehmoment erfolgen muss und nicht auf einen unbegrenzten Momentenspitzenwert, so dass gegenüber einen konventionellen Auslegung der Getriebebaueinheit eine Kostenersparnis verzeichnet werden kann. Weitere wesentliche Vorteile bestehen aufgrund des Vermeidens von Momentenspitzen und damit einer geringeren Belastung in einer wesentlich höheren Lebensdauer sowie keiner Beschränkung der Anfahr- und Dauersteifigkeit. Die Verwendung einer antizipierenden Momentenregelung ermöglicht die Vermeidung temporärer Überlastungen.

Die erfindungsgemäße Lösung wird nachfolgend anhand von Figuren erläutert. Darin ist im einzelnen folgendes dargestellt:

Figur 1      verdeutlicht in schematisch vereinfachter Darstellung den Grundaufbau eines Steuersystems zur Durchführung des erfindungsgemäßen Verfahrens;

Figur 2      verdeutlicht anhand eines Blockschaltbildes das Verfahren zur Begrenzung des Eingangsmomentes an einer Getriebebaueinheit;

Figur 3      verdeulicht anhand eines Signalflussbildes das erfindungsgemäße Verfahren einer antizipierenden Momentenregelung;

Figur 4      verdeutlicht ein Überlastprofil.

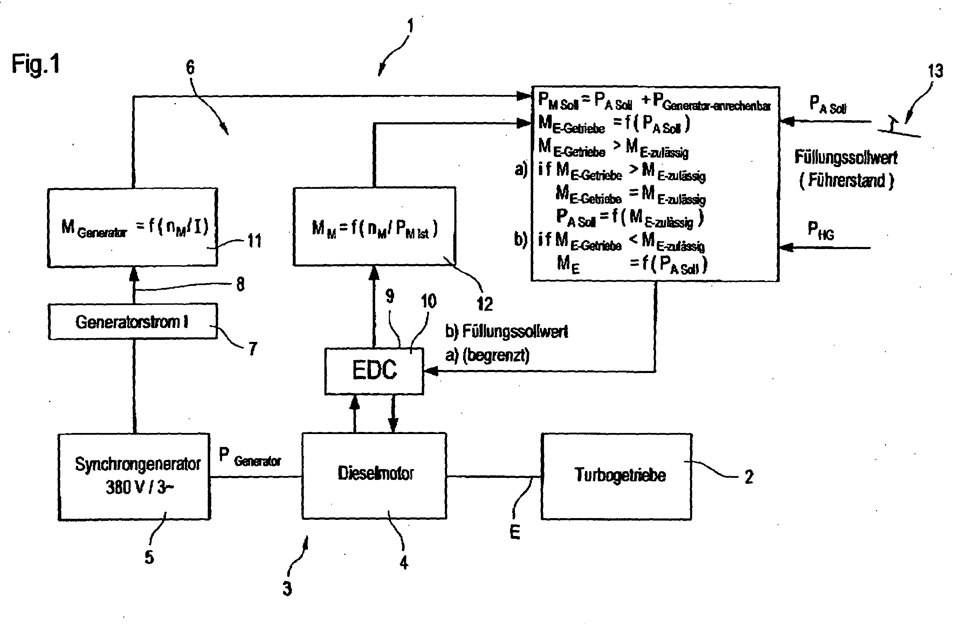

Die Figur 1 verdeutlicht in schematisch vereinfachter Darstellung anhand eines Blockschaltbildes ein Steuerungssystem 1 zur erfindungsgemäßen Begrenzung eines Eingangsmomentes einer Getriebebaueinheit 2 in einem Antriebsstrang 3, wie es insbesondere in Schienenfahrzeugen zum Einsatz gelangen kann. Unter Eingangsmoment wird daher das bei Leistungsübertragung von der Antriebsmaschine, beispielsweise in Form einer Verbrennungskraftmaschine 4 zum Abtrieb am Eingang E in die Getriebebaueinheit eingeleitete Moment verstanden. Der Antriebsstrang 3 umfasst eine Antriebsmaschine in Form einer Verbrennungskraftmaschine 4, welche direkt oder über weitere Übertragungselemente mit der Getriebebaueinheit 2 in Triebverbindung zum Antrieb, beispielsweise beim Einsatz in Schienenfahrzeugen von Achsen bzw. Rädern dient. Mit der Verbrennungskraftmaschine 4 mechanisch und in der Regel drehfest gekoppelt ist ein Generator 5, welcher zur Erzeugung der erforderlichen elektrischen Leistung, welche über ein Bordnetz 14 zur Verfügung gestellt wird, dient. Die von der Verbrennungskraftmaschine 4 erzeugte Leistung wird somit aufgeteilt, ein erster Leistungsanteil, der in der Regel auch den Hauptleistungsanteil bildet, dient dem Antrieb des Fahrzeuges, in welchem der Antriebsstrang 3 integriert ist, der zweite Leistungsanteil wird zur Versorgung der Bordelektronik beim Einsatz in Fahrzeugen, insbesondere Schienenfahrzeugen verwendet. Erfindungsgemäß wird die Verbrennungskraftmaschine 4 hinsichtlich der Leistungskennwerte dahingehend ausgelegt, daß die von ihr aufbringbare Gesamtleistung $P_{gesamt}$ der Summe aus der maximalen, vom Generator aufnehmbaren Leistung $P_{Generator\ max}$ und der maximal zulässigen, von der Getriebebaueinheit 2, insbesondere am Getriebeeingang E aufnehmbaren bzw. in diese eingeleiteten Leistung $P_{Getriebe\ max}$ entspricht, d.h., daß bei gleichzeitiger Versorgung des Antriebsstranges 3 und des Bordnetzes mit Leistung für beide Systeme jeweils die maximal mögliche Leistung bereitgestellt werden kann. Zum Schutz der Getriebebaueinheit 2 vor Überlastung und damit irreversiblen Schäden ist es jedoch erforderlich, das maximal zulässige aufnehmbare Eingangsmoment $M_{E\text{-}Getriebe}$ am Getriebeeingang E zu begrenzen. Erfindungsgemäß wird dabei die Leistungsabgabe der Verbrennungskraftmaschine 4 derart gesteuert bzw. geregelt, daß immer entsprechend des aktuellen gewünschten Verbrauches im Bordnetz über den Generator 5 die dazu erforderliche Leistung eingestellt und bereitgestellt wird, wobei gleichzeitig entsprechend des Fahrerwunsches auch immer der für den Antrieb erforderliche erste Leistungsanteil, welcher von der Verbrennungskraftmaschine 4 Ober die Getriebebaueinheit 2 übertragen wird, bereitgestellt wird. Dieser Leistungsanteil ist mit $P_{A\text{-}Soll}$ bezeichnet. Als die vom Generator benötigte zu berücksichtigende Leistung wird jedoch nicht der Wert $P_{Generator\text{-}Soll}$ angesehen, sondern ein erfindungsgemäß über eine antizipierende Momentenregelung ermittelter wahrscheinlich sich einstellender Wert $P_{Generator\text{-}anrechenbar}$. Dieser wird aus $P_{Generator\text{-}Soll}$ und dem aktuellen Istwert unter Berücksichtigung des zeitlichen Änderungsverhaltens ermittelt. Die von der Verbrennungskraftmaschine 4 dafür abzugebende Gesamtleistung $P_{Gesamt\text{-}Soll}$ entspricht somit der Summe der dem Generator zuzuführenden Leistung $P_{Generator\text{-}anrechenbar}$ und der dem Antriebsstrang $P_{A\text{-}Soll}$ zuzuführenden Leistung. Die Größe der einzelnen Leistungsanteile kann variieren. Dieser bewegt sich für den Generator zwischen einschließlich $0 \leq P_{Generator\text{-}anrechenbar} \leq P_{Generator\ max}$. Der erste in der Regel als Hauptleistungsanteil vorliegende Leistungsanteil kann dabei im Bereich von einschließlich $0 \leq P_{A\text{-}Soll} \leq P_{Getriebe\ max}$ liegen. Die von der Verbrennungskraftmaschine abgebbare Gesamtleistung $P_{Gesamt\text{-}Soll}$ liegt dementsprechend in einem Bereich zwischen $0 \leq P_{Gesamt\text{-}Soll} \leq P_{Gesamt\ max}$. Zur Erfassung des aktuellen Leistungsbedarfes im Bordnetz 14 und damit $P_{Generator\text{-}Soll}$ wird dabei mit Mitteln zur Erfassung wenigstens einer, den vom Generator 5 abgegebenen Strom wenigstens mittelbar charakterisierenden Größe der vom Generator 5 abgegebene Strom I erfasst und in einer Steuereinrichtung 6 eingelesen bzw. als Eingangssignal zugeführt. Die Mittel zur Erfassung wenigstens einer den vom Generator 5 abgegebenen Strom I wenigstens mittelbar charakterisierenden Größe sind hier mit 7 bezeichnet und dienen der Generierung eines Signals, welches an einem Eingang 8 der Steuereinrichtung 6 anliegt bzw. aufgenommen werden kann. Die Kopplung zwischen der Steuereinrichtung 6 und der Einrichtung zur Erfassung des Stromes 7 kann drahtlos oder aber über entsprechende andere Kommunikationsmittel erfolgen, beispielsweise auch ein Datenkommunikationsnetz. Des weiteren wird die aktuelle Drehzahl $n_M$ der Verbrennungskraftmaschine 4 oder eine, diese wenigstens mittelbar charakterisierende Größe erfasst. Diese kann entweder über eine spezielle Einrichtung zur Erfassung einer, die Drehzahl $n_M$ der Verbrennungskraftmaschine wenigstens mittelbar charakterisierenden Größe 9 erfasst werden, wobei diese Einrichtung in diesem Fall, hier nicht dargestellt, direkt mit der Steuereinrichtung 6 bzw. einem Eingang dieser, beispielsweise dem Eingang 7 bei serieller Datenübertragung oder einem zusätzlichen weiteren Eingang gekoppelt ist. Eine andere Möglichkeit besteht darin, diese, für andere Steuerungsvorgänge ohnehin ermittelte Größe beispielsweise über ein, der Verbrennungskraftmaschine 4 ohnehin zugeordnetes Steuergerät 10, welches die Funktion einer Steuereinrichtung übernimmt, auszulesen und der Steuereinrichtung 6 des Steuersystems 1 zur Begrenzung des Eingangsmomentes zuzuführen. Eine weitere Möglichkeit besteht darin, diese Größe einem ohnehin vorhandenen Datenkommunikationsnetz, beispielsweise in Form eines CAN-Busses, zwischen den einzelnen, den Antriebskomponenten zugeordneten Steuereinrichtungen zu entnehmen. In diesem Fall ist eine entsprechende Schnittstelle mit dem CAN-Bus erforderlich. Die Steuereinrichtung 6 fungiert dabei im wesentlichen als Auswert- und Zuordnungseinrichtung und ist in der Regel in Form eines Steuergerätes ausgeführt. Denkbar ist jedoch auch, daß die Steuereinrichtung 6 aus einer Vielzahl von Einzelkomponenten besteht, die jedoch hinsichtlich ihrer Funktion miteinander verknüpft sind und somit ein virtuelles Steuergerät bilden. Die Steuereinrichtung,6 umfasst zur Auswertung und Zuordnung eine Zuordnungseinrichtung 11, in welcher eine Kennlinie für das Generatormoment $M_{Generator} = f\,(n_M/I)$ abgelegt bzw. gespeichert ist. Die Kennlinie kann dabei in einem Diagramm als Zuordnung einzelner Betriebspunkte, in Tabellenform oder lediglich als mathematische Verknüpfung, abgelegt sein, woraus bei Kenntnis der aktuellen Drehzahl $n_{M-ist}$ der Verbrennungskraftmaschine 4 und bei ermitteltem, vom Generator abgegebenen Strom $I_{ist}$ das Generatormoment $M_{Generator-ist}$ ermittelt werden kann. Dieses aktuelle Generatormoment bildet dabei das Moment, das momentan bzw. zu einem bestimmten konkreten Zeitpunkt vom Generator 5 bei einer bestimmten Drehzahl $n_{M-Ist}$ der Verbrennungskraftmaschine aufgenommen wird. Des weiteren wird im Steuersystem eine Information über die aktuelle Kraftstoffzufuhr, insbesondere die Einspritzmenge der Verbrennungskraftmaschine verarbeitet. Diese kann beispielsweise aus einer, die Stellung eines Leistungsstellgliedes der Verbrennungskraftmaschine wenigstens mittelbar beschreibenden Größe abgeleitet werden. Dazu ist wiederum eine entsprechende Einrichtung zur Erfassung einer, die aktuelle, d.h. zu einem konkreten Zeitpunkt vorliegende Einspritzmenge der Verbrennungskraftmaschine erforderlich, Diese kann analog wie die Drehzahl entweder über eine spezielle Erfassungseinrichtung, hier im einzelnen nicht dargestellt, ermittelt werden und der Steuereinrichtung 6 zugeführt oder aber aus dem Steuergerät 10 der Verbrennungskraftmaschine ausgelesen oder über einen CAN-Bus bereitgestellt werden. Aus dieser aktuellen Einspritzmenge ergibt sich die von der Verbrennungskraftmaschine 4 aktuell, d.h. zu diesem bestimmten Zeitpunkt abgegebene Leistung $P_{M-Ist}$. Aus der aktuellen, d.h. momentanen Einspritzmenge kann zu jedem Zeitpunkt aufgrund des funktionalen Zusammenhanges zwischen $M_M = f\,(n_M/P_{M-Ist})$ jederzeit das von der Verbrennungskraftmaschine jeweils aktuell abgegebene Gesamtmoment $M_{Gesamt-Ist}$ ermittelt werden. Auch diese Zuordnung kann dabei über eine Zuordnungseinrichtung 12 in der Steuereinrichtung 6 erfolgen. Die Kennlinie kann ebenfalls in Form eines Kennfeldes in einem Diagramm, Tabellenform oder aber lediglich des mathematischen Zusammenhanges abgelegt sein. Zur Änderung des Fahrverhaltens kann dabei über ein Bedienelement, beispielsweise in Form eines Fahrpedals 13 oder eines anderen Elementes ein Wunsch nach Änderung der zur Verfügung stehenden Antriebsleistung bzw. Beschleunigung oder Verzögerung des Fahrzeuges vorgebracht werden. Die Betätigung am Fahrpedal wird dabei in ein Signal für eine, den Fahrerwunsch nach Änderung des Fahrzustandes wenigstens mittelbar beschreibende Größe umgesetzt, aus welchem ein Signal für die Vorgabe einer von der Verbrennungskraftmaschine 4 abzugebenden Leistung $P_{M-Soll}$ erzeugbar ist. Allerdings kann dies zur Vermeidung von Überlastungen der Getriebebaueinheit 2 nur im Rahmen des tatsächlichen Leistungsbedarfes unter Berücksichtigung des dabei von der Verbrennungskraftmaschine 4 bei entsprechender Drehzahl in den Eingang der Getriebebaueinheit einleitbaren Momentes zu diesem Zeitpunkt erfolgen, weshalb die vom Generator 5 erforderliche aufnehmbare Leistung $P_{Generator-ist}$ zu diesem Zeitpunkt, insbesondere das in den Generator eingeleitete Moment $M_{Generator-ist}$ bei einer bestimmten Drehzahl der Verbrennungskraftmaschine, berücksichtigt wird und des weiteren der für den Antrieb des Fahrzeuges erforderliche erste Leistungsanteil $P_{Antrieb-Soll}$. Beide Leistungsanteile bilden dabei die von der Verbrennungskraftmaschine 4 zu erzeugende Gesamtleistung $P_{M-Soll}$. In Abhängigkeit der jeweils aktuell ermittelten Drehzahl der Verbrennungskraftmaschine $n_{M-Ist}$ erfolgt dabei eine Überprüfung, inwieweit für die gewünschte Soll-Leistung $P_{M-Soll}$ das tatsächliche Eingangsmoment $M_{E-Getriebe}$ an der Getriebebaueinheit 2 eingehalten werden kann. Entsprechend des Fahrerwunsches nach Änderung eines Fahrzustandes zur Abgabe einer bestimmten Leistung $P_{M-Soll}$, der momentan vom Generator 5 aufgenommenen Leistung $P_{Generator-ist}$, insbesondere in Abhängigkeit der aktuellen Drehzahl $n_{M-ist}$, des daher aufzubringenden, vom Generator aufzunehmenden Momentes $M_{Generator-aktuell}$ wird das theoretisch von der Verbrennungskraftmaschine 4 bei dieser Drehzahl $n_{M-Ist}$ abgebare Moment $n_{M-Gesamt}$ und damit das dann theoretisch in die Getriebebaueinheit einzuleitende Moment $M_{E-Getriebe}$ theoretisch ermittelt und mit dem maximal zulässigen Eingangsmoment $M_{E-Getriebe-zulässig}$ verglichen. Überschreitet das ermittelte theoretisch sich einstellende Moment das maximal zulässige Eingangsmoment, wird der Fahrerwunsch dahingehend abgeändert, daß für den Antriebsstrang vorerst das erforderliche Moment $M_{E-Getriebe}$ und damit der erforderliche Leistungsanteil $P_{A-Soll}$ auf das bei der aktuellen Ist-Drehzahl $n_{M-Ist}$ und maximale zulässige Eingangsmoment $M_{E-Getriebe-zulässig}$ begrenzt wird, d.h. $M_{E-Getriebe}$ wird zu $M_{E-Getriebe\,-begrenzt} = M_{E-Getriebe-\,zulässig}$ bzw. $P_{A-Soll}$ wird zu $P_{A-begrenzt}$ und damit erfolgt auch eine Änderung des Sollwertes für die von der Verbrennungskraftmaschine zu erzeugenden Gesamtleistung $P_{M-Soll}$. Dabei wird zuerst einmal eine vom Fahrerwunsch abweichende Leistung $P_A$

für den Antriebsstrang bereitgestellt. Allerdings handelt es sich um einen dynamischen Prozess, wobei jede Drehzahländerung der Verbrennungskraftmaschine 4 entsprechende Wirkung zeigt, weshalb sich bei fortlaufendem Vergleich des sich theoretisch ergebenden Eingangsmomentes bei gleichbleibendem Fahrerwunsch und Änderung der Drehzahl der Verbrennungskraftmaschine $n_{M\text{-ist}}$ eine rasche Anpassung der eingestellten Leistung für den Antriebsstrang an die tatsächlich entsprechend des Fahrerwunsches erforderliche ergibt.

Bei Unterschreitung des maximal zulässigen Eingangsmomentes $M_{E\text{-Getriebezulässig}}$ durch den theoretisch ermittelten Wert für das Eingangsmoment ist keine Begrenzung erforderlich. Die bei Fahrerwunsch und entsprechender Abnahme von Leistung aus dem Bordnetz und damit Bereitstellung elektrischer Leistung über den Generator 5 sich ergebende erforderliche Gesamtleistung wird eingestellt. Aus dieser Größe wird dann der Soll-Wert für die Einspritzmenge als sogenannter Füllungssollwert gebildet und der Steuereinrichtung 10 der Verbrennungskraftmaschine 4 zugeführt, welcher eine entsprechende Verstellung am Leistungsstellglied bewirkt. In Abhängigkeit der Drehzahl, insbesondere bei Drehzahländerung und der damit erforderlichen Momentenänderung sowohl des vom Generator 5 aufnehmbaren Momentes $M_{Generator}$ als auch der Getriebebaueinheit $M_{E\text{-Getriebe}}$ wird das von der Verbrennungskraftmaschine abgebbare Moment $M_{M\text{-ist}}$ eingeregelt, wobei das an die Getriebebaueinheit abgebbare Moment $M_{E\text{-Getriebe-max}}$ nicht überschritten wird.

Die Steuereinrichtung 6 kann dabei von einer, der Getriebebaueinheit zugeordneten Steuereinrichtung oder einer anderen, beliebig im Fahrzeug angeordneten Steuereinrichtung, beispielsweise auch von der Fahrsteuerung, gebildet werden. Unter einem weiteren Aspekt kann die erfindungsgemäße Begrenzung des Eingangsmomentes auch bei entsprechender Ausgestaltung vom Steuergerät 10 der Verbrennungskraftmaschine 4 mit ausgeführt werden, wobei diese Lösung bei unterschiedlichen Herstellern der einzelnen Komponenten nicht zum Tragen kommen wird.

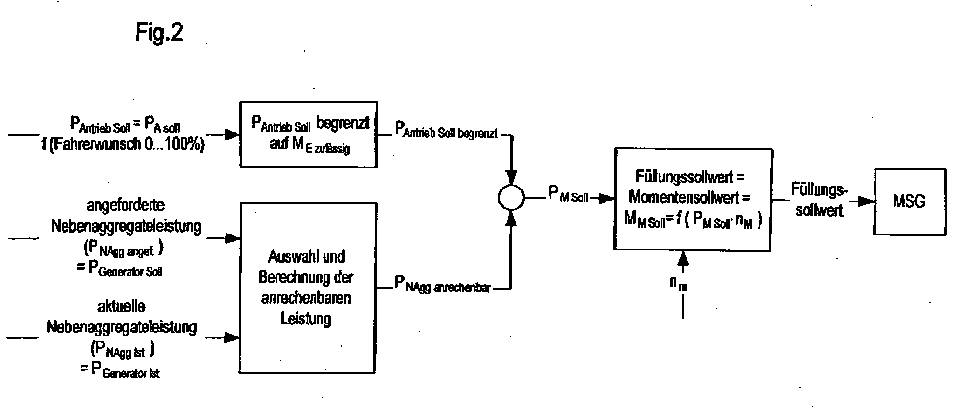

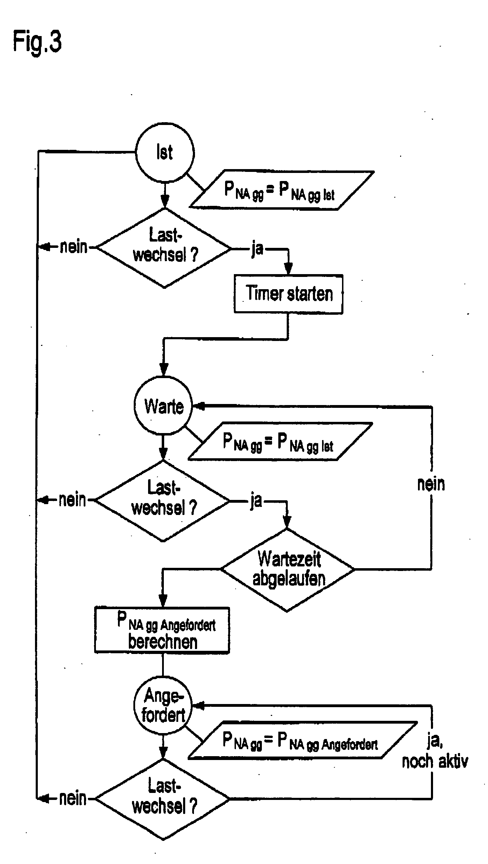

Erfindungsgemäß wird bei diesem Verfahren zur Ermittlung der tatsächlich zu einem bestimmten Zeitpunkt anrechenbaren Nebenaggregatsleistung $P_{Generator\text{-anrechenbar}}$ eine antizipierende Momentenregelung genutzt. Bei diesem Verfahren meldet dabei das Nebenaggregate-Management eine Veränderung der Nebenaggregatsleistung bevor diese tatsächlich durchgeführt wird. Bei einer Abschaltung von Nebenaggregatslasten wird somit eine Überlastung vermieden. Bei einer Zuschaltung kann die Motorleistung bzw. die Motorreglereinstellung verändert werden, um eine Überlastung der Verbrennungsmaschine, z. B. im Leerlauf, entgegenzuwirken. Die zur Berücksichtigung der von der Verbrennungskraftmaschine tatsächlich abgebbaren Leistung $P_{M\text{-soll}}$ vorgesehene Nebenaggregatsleistung erfolgt dabei über die tatsächlich anrechenbare Nebenaggregatsleistung, d. h. $P_{Generator\text{-anrechendar}}$. Diese wird durch das Nebenaggregate-Management berechnet sowie die aktuell zu einem Zeitpunkt t abgeforderte Nebenaggregatsleistung gemessen und berechnet. Die Messung der aktuellen Leistung erfolgt dabei wie bereits beschrieben. Aus der angeforderten Leistung für die Nebenaggregate $P_{Generator\text{-Soll}}$ und der aktuellen Nebenaggregatsleistung $P_{Generator\text{-Ist}}$ wird die Auswahl und Berechnung der anrechenbaren Leistung $P_{Generator\text{-anrechanbar}}$ vorgenommen, wie in Figur 2 dargestellt. Dabei wird die angeforderte Nebenaggregatsleistung $P_{Generator\text{-Soll}}$ mittels Ablaufautomaten, Wartezeiten und Übernahmesignale gesteuert. Die anrechenbare Nebenaggregatsleistung wird während der Reduzierung um einen definierten Wert geringer angesetzt, da die angeforderte Nebenaggregatsleistung während des Abschaltvorganges ungenau zu bestimmen ist. Nach einer Zeit tx wird dann wieder die aktuelle Nebenaggregatsleistung $P_{Generator\text{-latx}}$ verwendet, da die Laständerung abgeschlossen ist. Dieses Verfahren ist in der Figur 3 dargestellt. Diese verdeutlicht den Funktionsablauf der antizipierenden Momentenregler in Abhängigkeit der angeforderten Nebenaggregatsleistung, Ausgehend von einem Ist-Zustand wird die aktuelle vom Generator abgebbare Leistung $P_{Generator\text{-Ist}}$ der von den Nebenaggregaten aufgenommenen Leistung $P_{NAgg\text{-Ist}}$ gleichgesetzt. Ausgehend von diesem Ist-Zustand wird überprüft, ob ein Lastwechsel vorliegt, d. h. ein Zuschalten oder Abschalten von Nebenaggregaten erfolgt. Ist dies der Fall, beispielsweise durch Vorliegen eines Fahrerwunsches zur Abschaltung oder Zuschaltung eines Nebenaggregates, wird ein Timer gestartet. Nach einer entsprechenden Wartezeit von t= tw wird wiederum die aktuelle ermittelte Nebenaggregatsleistung $P_{NAgg\text{-Ist}} = P_{Generator\text{-Ist}}$ ermittelt. Es wird dann wieder geprüft, ob der Lastwechsel vorliegt, wenn ja erfolgt eine weitere Prüfung, ob die Wartezeit $\Delta$tw abgelaufen ist. Im Falle des Ablaufes von $\Delta$tw wird die angeforderte Nebenaggregatsleistung $P_{Generator\text{-Soll}} = P_{Generator\text{-angefordert}} = P_{Nagg\text{-angefordert}}$ berechnet. Dieser Wert wird dann einer Steuer- und/oder Regeleinrichtung zugeführt, welche aus dem aktuell vorliegenden Ist-Wert $P_{Generator\text{-Ist}} = P_{Nagg\text{-ist}}$ und der in Abhängigkeit der vorgesehenen Zu- oder Abschaltung von Nebenaggregaten angeforderten hier bestimmten Nebenaggregatsleistung $P_{NAgg\text{-angefordert}} = P_{Generator\text{-angefordart}}$ die Berechnung der anrechenbaren Leistung $P_{Generator\text{-anrechanbar}}$ vorgenommen. Diese anrechenbare Leistung entspricht dabei der bei der Ermittlung der erforderlichen Gesamtleistung zu berücksichtigenden Generatorleistung $P_{Generator\text{-angefordert}}$. In Abhängigkeit dieses Wertes wird dann der Füllungszustand bzw. die Einspritzmenge an der Verbrennungskraftmaschine geändert.

Gemäß einer vorteilhaften Weiterentwicklung wird berücksichtigt, dass die Zuordnung des Generatormomentes zum Strom und des Motormomentes zur Einspritzmenge toleranzbehaftet ist. Um dabei die Sicherheit zu erhöhen und Korrekturwerte ermitteln zu können, wird bei Ausführung der Getriebeeinheit als Wandlergetriebe im Wandlergang der Getriebebaueinheit eine Überprüfung des errechneten Eingangsmomentes des Getriebes durchgeführt. Auf der parabelförmigen Kennlinie der Leistungsaufnahme des hydrodynamischen Drehmomentwandlers ergibt sich bei einer gegebenen Motorleistung eine ganz bestimmte Drehzahl. Aus der Drehzahl kann damit die Leistung und das Drehmoment am Eingang des Getriebes berechnet werden und mit dem aus Kennlinien ermittelten Drehmoment verglichen werden.

Das erfindungsgemäße Verfahren wird gemäß einer Weiterentwicklung durch einen unabhängigen Regelalgorithmus verifiziert. Dabei werden zwei Grundzustände unterschieden, die Absolutüberlastung und das Überlastungsprofil.

Aus den getriebeinternen Größen Antriebsdrehzahl $n_1$ und Antriebsdrehzahl $n_2$ wird dabei über eine Funktion $P_E = F(v, n_1, (P_1/P_{1i})_{elektrisch})$ die aufgenommene Leistung berechnet. Dabei entspricht $P_E$ = im Getriebeeingang vorliegende und aufgenommene Leistung.

$v$ = Drehtahlverhältnis
$(P_1/P_{1i})_{elektrisch}$ = relative Leistungsaufnahme

Mittels der berechneten Leistung ist eine Verifikation und Bewertung möglich. Der absolute Überlastungszustand bewertet dabei eine temporär aufgetretene Überlastung und registriert den Maximalwert. Dies erfolgt durch einfache Berechnung nach folgender Formel:

$$P_{E,Überlast} = P_{E, berechnet} - P_{E,zulässig} \text{ für } P_{E, berechnet} > P_{E, zulässig}$$

Entspricht $P_{E,Überlast} > P_{E,Überlast\ max}$, wird dieser Wert als neuer Maximalwert, $P_{E,Überlast} = P_{E.\ Überlast\ max.\ neu}$ gespeichert.

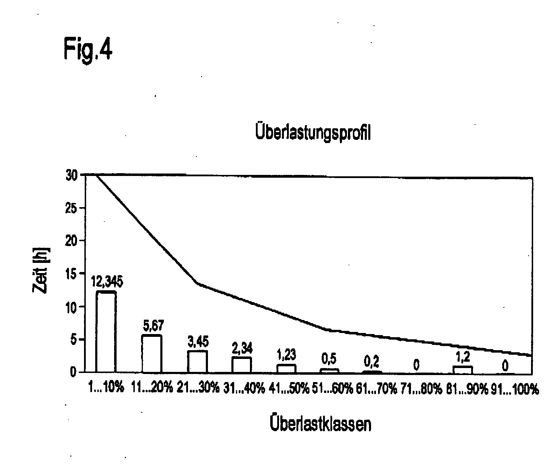

Im anderen Fall wird bei einem Überlastungsprofil die zeitliche Dauer der Überlastung registriert sowie die Höhe der Überlastung in Klassen eingeteilt. Die Einteilung ist dabei beispielhaft anhand Figur 4 in einem Zeit-Überlast-Klassendiagramm wiedergegeben, welches das Überlastungsprofil charakterisiert. Mittels der Analyse dieses Überlastungsprofils können dann Rückschlüsse auf die Steuerungsfunktion geschlossen werden. Dabei ist in Figur 4 beispielhaft ein derartiges Überlastungsprofil wiedergegeben. Hier sind beispielhaft sehr große Zeitanteile ausschließlich in den Klassen zwischen 11 und 20 kW vorgesehen. Daraus ersichtlich wird, dass die Ist-Wert Erfassung der Nebenaggregate beispielsweise durch eine Toleranz oder einen Fehler von z. B. 15 kW charakterisiert ist. Dies bedeutet, es werden immer 15 kW mehr gemeldet als tatsächlich abgenommen.

Werden größere Zeitanteile in der Klasse, die der maximalen Nebenaggregatleistung entspricht, ermittelt, kommt es zu schlagartigen Komplettabschaltungen, z. B. durch defekten Generator und/oder Umrichter.

In einer mittleren Klasse werden deutlich höhere Zeitanteile als in den darunter liegenden ermittelt. Dies lässt darauf schließen, dass ein größerer Verbraucher sich abschaltet, ohne dies anzukündigen. Die Vorankündigung mit entsprechender Reduzierung ist somit außer Kraft gesetzt.

Bezugszeichenliste

1    Steuersystem
2    Getriebebaueinheit
3    Antriebsstrang
4    Verbrennungskraftmaschine
5    Generator
6    Steuereinrichtung
7    Einrichtung zur Erfassung einer den vom Generator abgebbaren Strom wenigstens mittelbar beschreibenden Größe
8    Eingang
9    Einrichtung zur Erfassung einer die Drehzahl der Verbrennungskraftmaschine wenigstens mittelbar beschreibenden Größe
10   Steuergerät
11   Zuordnungseinrichtung
12   Zuordnungseinrichtung
13   Fahrpedal

$P_{Gesamt}$          von der Verbrennungskraftmaschine abgebbare Gesamtleistung.
$P_{Generator-max}$   maximal vom Generator aufnehmbare Leistung
$P_{Getriebe-max}$    maximal von der Getriebebaueinheit aufnehmbare Leistung

| | |
|---|---|
| $P_{M\text{-Ist}}$ | aktuelle, von der Verbrennungskraftmaschine abgegebene Leistung |
| $M_M$ | Motormoment |
| $M_{M\text{-Ist}}$ | aktuelles, von der Verbrennungskraftmaschine abgebbares Moment |
| $M_{Generator\text{-ist}}$ | aktuell vom Generator aufnehmbares Moment |
| $M_{Generator}$ | Generatormoment |
| E | Getriebeeingang |
| $n_M$ | Motordrehzahl |
| $n_{M\text{-Ist}}$ | aktuelle Ist-Drehzahl der Verbrennungskraftmaschine |
| $P_{Generator\text{-anrechenbar}}$ | anrechenbare vom Generator aufnehmbare Leistung |
| $P_{Nebenaggregat}$ | Nebenaggregatsleistung |
| $P_{Nebenaggregat\text{-anrechenbar}}$ | die von den Nebenaggregaten anrechenbar aufgenommene Leistung |

**Patentansprüche**

1. Verfahren zur Steuerung des Eingangsmomentes an einem Eingang (E) einer Getriebebaueinheit (2) in einem Antriebssystem (3) für Fahrzeuge, umfassend eine Verbrennungskraftmaschine (4), eine mit dieser koppelbare Getriebebaueinheit (2) und eine mit der Abtriebswelle der Verbrennungskraftmaschine direkt oder indirekt über weitere Übertragungsmittel verbundene als Generator (5) fungierende elektrische Maschine zur Bereitstellung elektrischer Leistung

> 1.1 bei welchem bei Vorgabe eines Wunsches nach Änderung des Fahrzustandes eine Stellgröße zur Einstellung der von der Verbrennungskraftmaschine abgebbaren Leistung gebildet wird;
> 1.2 bei welchem die Auslegung der Verbrennungskraftmaschine hinsichtlich der theoretisch möglichen Leistungsabgabe auf die Summe einer am Eingang der Getriebebaueinheit maximal zulässig aufnehmbaren Leistung als ersten Leistungsanteil und einer maximal vom Generator aufnehmbaren Leistung als zweiten Leistungsanteil erfolgt;
> 1.3 bei welchem wenigstens bei Vorgabe eines Wunsches nach Änderung des Fahrzustandes die Drehzahl der Verbrennungskraftmaschine (4) und eine weitere, die vom Generator (5) erzeugte elektrische Leistung indirekt oder direkt charakterisierende Größe ermittelt werden;
> 1.4 bei welchem in Abhängigkeit der aktuellen Drehzahl der Verbrennungskraftmaschine und dem, entsprechend des Fahrerwunsches von der Verbrennungskraftmaschine zu erzeugenden und von der Getriebebaueinheit aufzunehmenden Leistungsanteils das theoretisch am Eingang der Getriebebaueinheit einzubringende Moment ermittelt wird;
> 1.5 bei welchem das theoretisch am Eingang der Getriebebaueinheit einzubringende Moment mit dem maximal zulässigen Eingangsmoment am Eingang der Getriebebaueinheit verglichen wird, wobei bei Überschreitung das theoretisch am Eingang der Getriebebaueinheit einzubringende Moment auf das maximal zulässige Eingangsmoment am Getriebeeingang begrenzt wird, indem entsprechend der aktuellen Drehzahl ein Sollwert für die von der Verbrennungskraftmaschine abzugebende Leistung aus der Summe aus der aktuell vom Generator angeforderten Leistung und dem als aus dem maximal zulässigen Eingangsmoment gebildeten ersten Leistungsanteil gebildet wird und abhängig von dieser eine Stellgröße zur Beaufschlagung der Stellenrichtung der Verbrennungskraftmaschine zur Änderung der abgebbaren Leistung gebildet wird;
> **dadurch gekennzeichnet, dass** die aktuell vom Generator zu erbringende Leistung für den Antrieb von Nebenaggregaten aus der theoretisch zum Antrieb der Nebenaggregate angeforderten Leistung und der aktuellen vom Generator zu erbringenden Leistung unter Berücksichtigung des Änderungsverhaltens durch eine antizipierende Momentenregelung bestimmt wird.

2. Verfahren nach Anspruch 1, **gekennzeichnet durch** die folgenden Merkmale:

> 2.1 bei welchem zu einem Zeitpunkt tx die vom Generator zu erbringende Leistung $P_{Generator\text{-ist}}$ ermittelt wird;
> 2.2 bei welchem gleichzeitig oder zeitlich versetzt zu tx das Vorliegen eines gewünschten Lastwechsels in Form einer geänderten vom Generator angeforderten Leistung geprüft wird und bei
> 2.3 Vorliegen eines Lastwechsels ein Timer gestartet wird, wobei nach einer Wartezeit tw erneut das Vorliegen eines Lastwechsels geprüft wird und bei Vorliegen eines Lartwechsels und bei Ablauf der Wartezeit die tatsächlich den Nebenaggregaten anrechenbare Leistung berechnet wird.

3. Verfahren nach einem der Ansprüche 1 oder 2, **dadurch gekennzeichnet, dass** bei vorgegebenem Wunsch nach Änderung des Fahrzustandes und Überschreitung des maximal zulässigen Eingangsmomentes durch das ermittelte theoretisch am Eingang der Getriebebaueinheit einzubringende Moment das dem Wunsch nach Änderung des Fahrzustandes entsprechende am Getriebeeingang einzustellende Moment in Abhängigkeit von der aktuellen Drehzahl der Verbrennungskraftmaschine und der Anforderung durch den Generator fortlaufend ermittelt und mit dem maximal zulässigen Eingangsmoment verglichen wird.

**4.** Verfahren nach einem der Ansprüche 1 bis 3, **dadurch gekennzeichnet, dass** das vom Generator geforderte Moment bei bestimmter Drehzahl der Verbrennungskraftmaschine aus dem vom Generator entnommenen Strom ermittelt wird.

**5.** Verfahren nach einem der Ansprüche 1 bis 4, **dadurch gekennzeichnet, dass** als Stelleinrichtung zur Beeinflussung des von der Verbrennungskraftmaschine abgebbaren Momentes eine die Einspritzmenge der Verbrennungskraftmaschine beeinflussende Einrichtung fungiert.

**6.** Verfahren nach einem der Ansprüche 4 oder 5, **dadurch gekennzeichnet, dass** die ermittelten Werte für die vom Generator geforderte Leistung und die Einspritzmenge der Verbrennungskraftmaschine um einen Korrekturwert verändert werden.

**7.** Verfahren nach Anspruch 6, **dadurch gekennzeichnet, dass** der Korrekturwert bei Ausführung der Getriebebaueinheit mit einem hydrodynamischen Drehzahl-/Drehmomentwandler aus einem im Wandlergang sich aus der Kennlinie der Leistungsaufnahme des Wandlers ergebenden Arbeitspunkt der Verbrennungskraftmaschine und damit der Leistung am Eingang des Getriebes berechnet wird.

**Claims**

**1.** A method for controlling the input torque at an input (E) of a transmission unit (2) in a drive system (3) for vehicles, including an internal combustion machine (4), a transmission unit (2) couplable therewith and a machine operating electrically as a generator (5) for generating electric power, said machine being connected with the output shaft of the internal combustion machine directly or indirectly via further transmission means

1.1 wherein when inputting a requested change in driving mode a variable is formed for adjusting the power which can be generated by the internal combustion machine;

1.2 wherein the configuration of the internal combustion machine as regards the power which can be generated theoretically affects the sum of a maximum admissible absorbable power at the input of the transmission unit as first power portion and of a maximum absorbable power from the generator as second power portion;

1.3 wherein at least when inputting a requested change in driving mode the rotation speed of the internal combustion machine (4) and another magnitude indirectly or directly characterising the electric power produced by the generator (5) are determined;

1.4 wherein the torque to be theoretically produced at the inlet of the transmission unit is determined, according to the actual rotation speed of the internal combustion machine, to the power portion to be generated by the internal combustion machine and to the power portion to be absorbed by the transmission unit;

1.5 wherein the torque to be theoretically produced at the input of the transmission unit is compared with the maximal admissible input torque at the input of the transmission unit, wherein in case of exceeded value, the torque to be theoretically produced at the input of the transmission unit is limited to the maximal admissible input torque at the input of the transmission unit, wherein according to the actual rotation speed a set value for the power to be generated by the internal combustion machine is formed of the sum of the power actually required by the generator and of the first power portion derived from the maximum admissible input torque and wherein according thereto a variable is formed for actuating the adjustment device of the internal combustion machine to alter the power which can be produced; **characterised in that** the actual power to be produced by the generator for driving auxiliary units is determined from the power theoretically required for driving the auxiliary units and the actual power to be produced by the generator while taking into account the change behaviour through anticipating torque regulation.

**2.** A method according to claim 1, **characterised by** the following features:

2.1 wherein at an instant tx the power to be produced by the generator PGenerator-real is determined;

2.2 wherein simultaneously or temporarily delayed with respect to instant tx the presence of a requested load change in the form of a modified power required by the generator is verified

2.3 in the presence of a load change a timer is started, wherein after a waiting time tw the presence of a load change is again verified and in the presence of a load change and upon expiry of the waiting time the power effectively allowable to the auxiliary units is calculated.

**3.** A method according to any of the claims 1 to 2, **characterised in that** once the request for altering the driving mode has been input and should the maximum admissible input torque be exceeded by the theoretical torque to be generated at the input of the transmission unit, the torque to be adjusted at the transmission input corresponding to the requested change of the driving mode is determined continuously by the generator according to the actual rotation speed of the internal combustion machine and to the requirements, and is then compared with the maximal admissible input torque.

**4.** A method according to any of the claims 1 to 3, **characterised in that** the torque required from the generator is determined from the current derived from the generator at a given rotation speed.

**5.** A method according to any of the claims 1 to 4, **characterised in that** a device varying the injection amount of the internal combustion machine acts as an adjustment device for varying the torque which can be generated by the internal combustion machine.

**6.** A method according to any of the claims 4 to 5, **characterised in that** the determined values are modified for the power required by the generator and the injection amount of the internal combustion machine by a correction value.

**7.** A method according to claim 6, **characterised in that** the correction value, if the transmission unit includes a hydrodynamic rotation speed/torque converter, is calculated in the torque gear, on the basis of a working point derived from the characteristic power absorption of the converter of the internal combustion machine and hence the power at the input of the transmission

**Revendications**

**1.** Procédé de contrôle du couple d'entrée à l'entrée (E) d'une transmission (2) dans un circuit d'entraînement (3) pour véhicules, comportant une machine à combustion interne (4), une transmission (2) pouvant s'accoupler avec celle-ci et une machine à commande électrique faisant office de générateur (5) pour produire de l'électricité,ladite machine étant connectée avec l'arbre de sortie de la machine à combustion interne directement ou indirectement par l'intermédiaire d'autres moyens de transmission

1.1 dans lequel, si l'on saisit un changement de mode de conduite désiré, une variable est constituée pour régler la puissance que peut générer la machine à combustion interne;
1.2 dans lequel la configuration de la machine à combustion interne en ce qui concerne la puissance pouvant être produite théoriquement affecte la somme d'une puissance absorbable maximale admissible à l'entrée de la transmission comme première partie de puissance et d'une puissance absorbable maximale provenant du générateur comme seconde partie de puissance;
1.3 dans lequel au moins si l'on saisit un changement de mode de conduite désiré on détermine la vitesse de rotation de la machine à combustion interne (4) et une autre grandeur caractérisant indirectement ou directement l'électricité produite par le générateur (5);
1.4 dans lequel on détermine le couple devant être théoriquement produit à l'entrée de la transmission, en fonction de la vitesse de rotation réelle de la machine à combustion interne, de la partie de puissance devant être produite par la machine à combustion interne et la partie de puissance devant être absorbée par la transmission;
1.5 dans lequel on compare le couple devant être théoriquement produit à l'entrée de la transmission avec le couple d'entrée maximal admissible à l'entrée de la transmission, dans lequel en cas de dépassement,le couple devant être théoriquement produit à l'entrée de la transmission est limité au couple d'entrée maximal admissible à l'entrée de la transmission,dans lequel en fonction de la vitesse de rotation réelle une valeur définie pour la puissance devant être produite par la machine à combustion interne est constituée de la somme de la puissance effectivement requise par le générateur et de la première partie de puissance dérivée du couple d'entrée maximal admissible et dans lequel en fonction de celle-ci on obtient une variable pour actionner le dispositif de réglage de la machine à combustion interne afin de modifier la puissance pouvant être produite;**caractérisé en ce que** l'on détermine la puissance réelle devant être produite par le générateur pour entraîner des unités auxiliaires à partir de la puissance théoriquement requise pour entraîner les unités auxiliaires et de la puissance réelle devant être produite par le générateur en tenant compte du changement de comportement provoqué par la régulation de couple avec anticipation

**2.** Procédé selon la revendication 1, **caractérisé par** les éléments suivants:

2.1 dans lequel on détermine à un instant tx la puissance devant être produite par le générateur Pgénérateur-réelle;

2.2 dans lequel on vérifie la présence d'un changement de charge demandé sous la forme de modfication de puissance requise par le générateur, de manière simultanée ou avec temporisation par rapport à l'instant tx

2.3 une minuterie démarre en présence d'un changement de charge, dans lequel après un délai d'attente tx, on revérifie la présence d'un changement de charge et l'on calcule la puissance effectivement imputable aux unités auxiliaires en présence d'un changement de charge à expiration d'un délai d'attente.

**3.** Procédé selon l'une quelconque des revendications 1 ou 2, **caractérisé en ce qu'**après saisie de la demande de modification du mode de conduite et en cas de dépassement du couple d'entrée maximal admissible par le couple théorique devant être produit à l'entrée de la transmission, le générateur détermine en continue, en fonction de la vitesse de rotation réelle de la machine à combustion interne et des exigences, le couple devant être ajusté à l'entrée de transmission en fonction du changement de mode de conduite, avant comparaison avec le couple d'entrée maximal admissible.

**4.** Procédé selon l'une quelconque des revendications 1 à 3, **caractérisé en ce que** le couple requis par le générateur on détermine à partir du courant issu du générateur à une vitesse de rotation donnée.

**5.** Procédé selon l'une quelconque des revendications 1 ou 4, **caractérisé en ce qu'**un dispositif faisant varier la quantité d'injection de la machine à combustion interne fait office de dispositif de réglage pour faire varier le couple que peut générer la machine à combustion interne.

**6.** Procédé selon l'une quelconque des revendications 4 ou 5, **caractérisé en ce que** les valeurs déterminées sont modifiées en fonction de la puissance requise par le générateur et la quantité d'injection de la machine à combustion interne selon une valeur de correction.

**7.** Procédé selon la revendication 6, **caractérisé en ce que** la valeur de correction, si la transmission comporte un convertisseur vitesse/couple hydrodynamique, est calculée dans la vitesse de couple, à partir d'un point de travail issu de l'absorption de puissance caractéristique du convertisseur de machine à combustion interne et donc la puissance à l'entrée de la transmission.

Fig.1

Fig.2

# Fig.3

Ist

$P_{NA\,gg} = P_{NA\,gg\,Ist}$

Last- wechsel ?   ← nein   — ja —

Timer starten

Warte

$P_{NA\,gg} = P_{NA\,gg\,Ist}$

Last- wechsel ?   ← nein   — ja —

nein

Wartezeit abgelaufen

$P_{NA\,gg\,Angefordert}$ berechnen

Ange- fordert

$P_{NA\,gg} = P_{NA\,gg\,Angefordert}$

ja, noch aktiv

Last- wechsel ?   ← nein

Fig.4

Überlastungsprofil

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137475

- GB 2411739 A